# EUROPÄISCHE PATENTSCHRIFT

(11) **EP 0 638 356 B1**
(45) Veröffentlichungstag und Bekanntmachung des Hinweises auf die Patenterteilung: **08.10.1997**
(21) Anmeldenummer: 94110786.4
(22) Anmeldetag: 12.07.1994
(51) Int. Cl.: B01J 2/22

(54) **Pelletiervorrichtung für entwässertes Material, insbesondere Klärschlamm**
Device for pelletizing dewatered material, specially sewage sludge
Installation pour la granulation de matérial déshydraté, specialement des boues des eaux d'égout

(30) Priorität: 02.08.1993 DE 4325907
(43) Veröffentlichungstag der Anmeldung: 15.02.1995
(73) Patentinhaber: LINDAUER DORNIER GESELLSCHAFT M.B.H, D-88129 Lindau (DE)
(72) Erfinder: Hehle, Richard, A-6912 Hörbranz (DE); Rutz, Andreas Dr.-Ing., D-88131 Lindau (DE); Resch, Karsten Dipl.-Ing. (BA), D-88662 Überlingen (DE)

(56) Entgegenhaltungen:
- EP-A- 0 441 740
- WO-A-86/07049
- DE-A- 4 013 761
- US-A- 2 617 169

## Beschreibung

Die Erfindung betrifft eine Pelletiervorrichtung für entwässertes pastöses Material, insbesondere Klärschlamm nach dem Oberbegriff des Anspruchs 1.
Aus der DE-Patentschrift 40 13 760 ist eine Einrichtung zum Formen würstchenförmiger Formlinge aus pastösem Schlammaterial bekannt.
Der technischen Lösung gemäß dem bekannten Patent liegt die Aufgabe zugrunde, in einer mit einer Vielzahl von Durchgangslöchern versehenen Matrize, die aus einem Ober- und einem Unterteil besteht, durch welche das Schlammaterial gepreßt wird, Verstopfungen der Durchgangslöcher zu verhindern.

Dazu wird vorgeschlagen, daß das Oberteil der Matrize auf der Hauptfläche des Grundteils aufliegt und eine Scherplatte bildet.
Die erwähnten Durchgangslöcher erstrecken sich durch das Grundteil und die Scherplatte. Die sich in den übereinanderliegenden Durchgangslöchern festsetzenden nicht formbaren Fremdstoffe, werden durch die auf dem Grundteil hin- und herverschiebbaren Scherplatte abgetrennt.
Eine derartige Einrichtung unterscheidet sich aber nicht von einer an sich bekannten Pelletiervorrichtung mittels der eine Scherplatte zum Ablängen der Pellets eine oszillierende Hin- und Herbewegung ausführt.
Gemäß der DE-PS werden würstchenförmige Formlinge hier nicht abgelängt. Es werden also keine Formlinge definierter Länge erhalten.

Bei Verstopfungen der Durchgangslöcher ist gemäß der bekannten Einrichtung der Prozeß zum Herstellen der Formlinge unterbrochen.
Die bekannte Einrichtung ist demnach auch nicht in der Lage, während der Behebung etwaiger Verstopfungen weiterhin würstchenförmiges Strangmaterial zu produzieren. Ein im wesentlich kontinuierlicher Arbeitsprozeß ist damit nicht gesichert.

Der Erfindung liegt daher die Aufgabe zugrunde, eine Pelletiervorrichtung für entwässertes pastöses Material zu schaffen, bei der im Falle eines verminderten Durchsatzes z.B. bei Verstopfungen der Durchgangslöcher der Pelletierprozeß nicht unterbrochen wird und wobei nicht pelletierbares Schlammaterial aus dem Pelletierprozeß ausgeschieden wird.

Die Aufgabe wird erfindungsgemäß durch die kennzeichnenden Merkmale des Anspruchs 1 gelöst.
Danach ist der Ausgang des Schlamm-Aufnahmebehälters von höhenverschiebbar an der Behälterwandung vorhandenen Schiebern gebildet, dessen ausgangsseitiges Ende dicht auf der Materialaufgabefläche des Matrizenoberteils ruht.
Dieses Oberteil weist wenigstens ein Lochfeld und ein lochfreies Verschlußfeld auf.
Das Oberteil ist verschiebbar auf dem Unterteil angeordnet. Eine andere Lochfeldanordnung ist gegeben, wenn z.B. zwei Lochfelder vorhanden sind. Dann kann zwischen den zwei Lochfeldern das Verschlußfeld liegen.
Eine derartige Festlegung führt dazu, daß im Falle eines verminderten Schlammdurchsatzes z.B. bei Verstopfung der Durchgangslöcher, der Prozeßablauf kurzzeitig unterbrochen würde, weil zwischenzeitlich das lochfreie Verschlußfeld den Behälterausgang verschließt. Dies wirkt sich jedoch nicht nachteilig auf die Pelletierung aus.

Mit der Erfindung sind pelletartige Formlinge mit im wesentlichen definierten Abmaßen herstellbar. In vorteilhafter Weise entfällt damit die Zerkleinerung der Pellets nach dem Trocknungsprozeß.

Dadurch, daß ein gesteuertes wechselweises Abtragen von nicht pelletierbarem Schlammaterial von den Lochfeldern der Matrize erfolgt, ist ein kontinuierlicher Betrieb der Pelletiereinrichtung gewährleistet. Verstopfungen der Einrichtung durch nicht pelletierbaren Materials sind damit ausgeschlossen.

Bei längeren Stillstandszeiten der Pelletiervorrichtung wird der Ausgang des Schlamm-Aufnahmbehälters automatisch durch das lochfreie Feld des Matrizenoberteils verschlossen. Dadurch wird eine problemlose Wiederinbetriebnahme der Vorrichtung möglich, weil der in den Löchern der Matrize sitzende Schlamm zwischenzeitlich auf 1/2 bis 1/3 des ursprünglichen Volumens zusammentrocknet, wodurch eine nahezu selbständige Reinigung der Matrize erfolgt. Dies ist z.B. dadurch möglich, weil die in den Löchern des betreffenden Lochfeldes eingetrockneten Schlammteile sich leicht bei Wiederinbetriebnahme der Vorrichtung durch den im Aufnahmebehälter unter Überdruck stehenden Schlamm aus den Löchern herausschieben lassen.

Weitere vorteilhafte Wirkungen der Pelletiervorrichtung sind der nachfolgenden Beschreibung entnehmbar.

Die Erfindung soll anhand des in den Zeichnungen dargestellten Ausführungsbeispiels näher erläutert werden. Es zeigen in der Zeichnung
- Fig. 1: einen Schnitt durch die Pelletiervorrichtung mit den nachgeordneten Transportbändern und einen Trockner in der Seitenansicht,
- Fig. 2: die übereinanderliegenden Matrizenteile in der Draufsicht,
- Fig. 3: einen Ausschnitt "II" gem. Fig. 2,
- Fig. 4: einen Schnitt durch die Matrize nach Linie I-I gemäß Fig. 3.

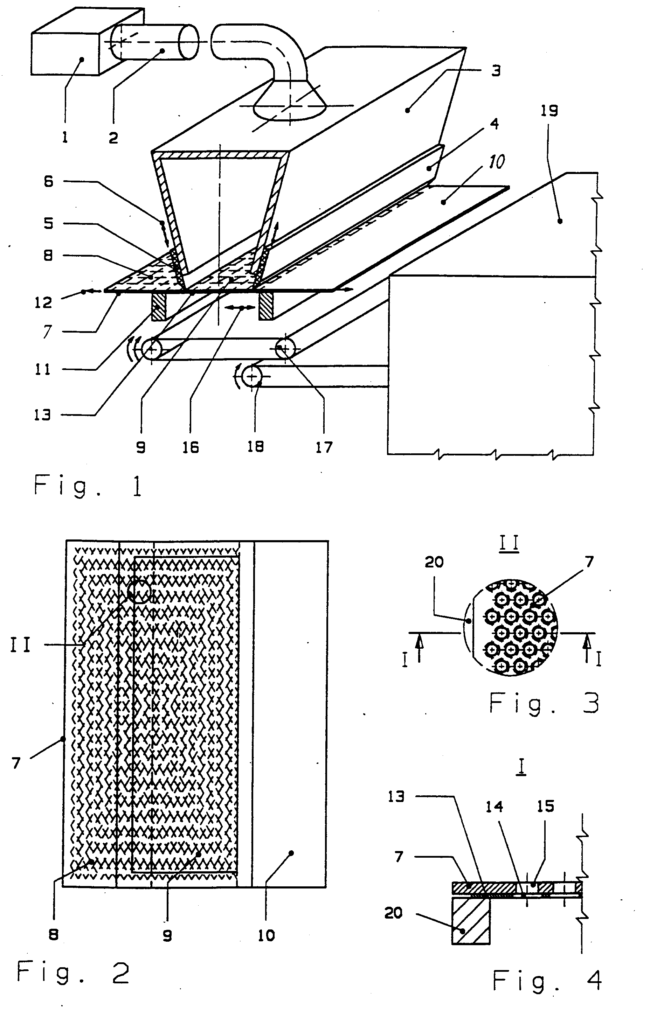

Bei der in Fig. 1 dargestellten Pelletiervorrichtung wird der entwässerte pastöse Schlamm von einer Fördereinrichtung 1 über eine Rohrleitung 2 in den Aufnahmebehälter 3 gefördert. Der Aufnahmebehälter 3 besitzt zum gleichmäßigen Verteilen des Schlammes einen trichterförmigen Querschnitt. Der Behälter 3 ist in Art eines Druckbehälters ausgebildet, dessen Aufgabe es u.a. ist, den zugeführten Schlamm oberhalb des Behälterausganges über dessen Breite zu verteilen.
Den Ausgang des Aufnahmebehälters 3 bilden die an den Seitenwänden des Aufnahmebehälters 3 angeordneten Schieber 4,5.

Die Schieber 4,5 sind höhenverschiebbar angeordnet. Die Doppelpfeile 6 symbolisieren die Verstellbewegung der Schieber 4,5.
Die freien unteren Enden der Schieber 4,5 können einen spitzwinklig ausgebildeten Abschluß aufweisen.
Die freien unteren Enden der Schieber 4,5 dichten den Aufnahmebehälter 3 gegen einen seitlichen Schlammaustritt auf dem Matrizenoberteil 7 ab.

Das Matrizenoberteil besitzt zwei Lochfelder 8,9 und ein lochfreies Verschlußfeld 10. Die Lochfelder 8,9 sind dabei so festgelegt, daß an das erste Lochfeld 8 das zweite Lochfeld 9 angrenzt oder aber an das erste oder zweite Lochfeld sich das lochfreie Verschlußfeld 10 anschließt.
Eine andere Ausbildung des Matrizenoberteils 7 sieht vor, daß zwischen den Lochfeldern 8,9 das lochfreie Verschlußfeld 10 gelegen ist.

Das Matrizenoberteil 7 ist auf dem Matrizenunterteil 11 verschiebbar geführt. Zu diesem Zweck greift am Matrizenoberteil 7 ein Antrieb an, der durch die Pfeile 12 symbolisch dargestellt ist.

Das Matrizenunterteil 11 weist ein einziges Lochfeld 13 auf.

Die Lochfelder 8,9 bzw. 13 von Matrizenober- und -unterteil 7,11 besitzen Lochreihen gleicher Teilung.
Die Durchgangslöcher 14 des Matrizenunterteils 11 weisen im Vergleich zu den Durchgangslöchern 15 des Matrizenoberteils 7 einen größeren Durchmesser auf (Fig. 4).
Damit wird gewährleistet, daß die abzulängenden Schlammstränge lediglich durch die Löcher 15 des Matrizenoberteils in ihrem Durchmesser bestimmt werden.
Dies bringt Vorteile mit sich beim Ablängen der Schlammstränge und beim Reinigen des Matrizenoberteils 7.

Das Matrizenunterteil 11 ist mit einem Antrieb verbunden, der symbolisch durch den Doppelpfeil 16 dargestellt ist. Der Antrieb versetzt das Matrizenunterteil 11 in eine oszillierende Bewegung in Richtung des Doppelpfeiles 16.

Im Normalbetrieb steht das Matrizenoberteil 7 still. Das Matrizenunterteil 11 hingegen führt eine oszillierende Bewegung in der Größenordnung von einer Lochreihenteilung aus.
Bei jedem Hub des Matrizenunterteils 11 wird der durch das Lochfeld 8 oder 9 des Matrizenoberteils 7 gepreßte Schlamm abgeschert und fällt z.B. auf ein unter der Pelletiervorrichtung angeordnetes, laufendes Förderband 17. Von hier aus gelangen die Pellets auf das eigentliche Trocknerband 18, das z.B. einen an sich bekannten Trockner 19 durchläuft. In Abhängigkeit von der Schlammart kann auf das Förderband 17 verzichtet werden.

Da bei dieser Pelletiervorrichtung auf eine gesonderte Presseinrichtung verzichtet wird, können die Matrizen 7,11 sehr dünn ausgelegt werden.
In einer Versuchsanlage der Anmelderin ist Klärschlamm mit einer Trockensubstanz von 20 bis 25 % pelletiert worden. Die obere Lochmatrize 7 wies eine Dicke von 3 mm und die Abschermatrize eine Dicke von 1 mm auf. Durch die relativ geringen Blechdicken der Matrizen wird die Verstopfungshäufigkeit auf ein Minimum reduziert.
Der oszillierende Antrieb des Matrizenunterteils 11 sorgt für ein zuverlässiges Abklopfen der abgelängten Schlammstränge.

Wie schon erwähnt, dichten die Schieber 4,5 den Aufnahmebehälter 3 seitlich gegen das Matrizenoberteil 7 ab.
Im Normalbetrieb sitzen die Schieber 4,5 auf dem Matrizenoberteil 7, welches die Lochfelder 8,9 und das lochfreie Verschlußfeld 10 aufweist.
Wird die auf das Förderband 17 ausgebrachte Pelletschüttung ungleichmäßig, das ist in der Regel dann der Fall, wenn der Anteil von nicht pelletierbaren Schlamms wegen Zusätzen der betreffenden Lochfelder 8,9 zunimmt, laufen folgende Arbeitsschritte in der Vorrichtung ab:
a) einer der Schieber 4,5 wird geöffnet,
b) das Matrizenoberteil 7 wird z.B. nach rechts verschoben. Dabei wird das Lochfeld mit dem nicht pelletierbaren Schlammbestandteilen auf die rechte Seite der Vorrichtung transportiert. Das freie Lochfeld wird von der linken Seite unter den Behälterausgang gefahren.
c) der betreffende Schieber setzt wieder auf das Matrizenoberteil 7 auf.
   Der Lochfeldwechsel ist damit beendet.
d) die nicht pelletierbaren Schlammbestandteile werden mittels einer hier nicht dargestellten Einrichtung automatisch von dem Lochfeld 9 abgetragen.

Wird die Pelletiervorrichtung für einen längeren Zeitraum stillgesetzt, wird folgendermaßen verfahren:
Bei geschlossenem Schieber 4,5, d.h. die Schieber sitzen dichtend auf dem Matrizenoberteil 7 auf, wird das Matrizenoberteil 7 bis zu einer nicht dargestellten Begrenzung auf der rechten oder linken Seite der Pelletiervorrichtung geschoben. Das betreffende Lochfeld 8,9 befindet sich dann nicht mehr unter dem Behälterausgang, statt dessen wird der Behälterausgang von dem lochfreien Verschlußfeld 10 geschlossen.
Der in den Löchern 14 der Matrize 7 anhaftende Schlamm trocknet dabei zwischenzeitlich aus. Die getrockneten Schlammteile können z.B. durch eine Rüttelbewegung der Matrizen 7,11 aus den Löchern entfernt werden.

In Fig. 2 ist das Matrizenoberteil 7 mit dem darunter liegenden Matrizenunterteil 11 in der Draufsicht dargestellt.
Das Matrizenoberteil 7 besteht aus dem ersten Lochfeld 8 und aus dem sich daran anschließenden zweiten Lochfeld 9. An das zweite Lochfeld 9 schließt sich das zweite lochfreie Verschlußfeld 10 an.

Fig. 3 zeigt einen Ausschnitt "II" der übereinander angeordneten Matrizenteile 7,11 gem. Fig. 2. In dem Ausschnitt ist zu erkennen, daß das Matrizenunterteil 11 eine größere Lochung aufweist als das Matrizenoberteil 7. Damit wird deutlich, daß die Formgebung des Schlammaterials durch das Matrizenoberteil 7 erfolgt. Dies erleichtert das "Abfallen" der abgescherten Pellets. Auch ist hier die Entstehung der Pellets erkennbar. Der Schlamm durchläuft die Matrize 7; damit wird der Durchmesser der Pellets festgelegt. Über die Frequenz der oszillierenden Bewegung im Zusammenspiel mit der Fördermenge der Fördereinrichtung 1 wird die Pelletlänge festgelegt. Die abgescherten Pellets fallen im freien Fall in Art einer Wurfparabel auf das unter der Pelletiervorrichtung angeordnete Förderband 17.

Fig. 4 zeigt einen Schnitt gem. Linie I-I nach Fig. 3. Das Matrizenoberteil mit den Löchern 15 liegt ebenflächig auf dem Matrizenunterteil 11 auf. Das Matrizenunterteil 11 mit dem Lochfeld 13 wird von einem Rahmen 20 getragen, an dem der Antrieb zur oszillierenden Bewegung des Matrizenunterteils 11 angreift.

### ZEICHNUNGS-LEGENDE

- 1: Fördereinrichtung
- 2: Rohrleitung
- 3: Aufnahmebehälter
- 4: Schieber
- 5: Schieber
- 6: Doppelpfeile
- 7: Matrizenoberteil
- 8: Lochfeld
- 9: Lochfeld
- 10: Verschlußfeld
- 11: Matrizenunterteil
- 12: Pfeile
- 13: Lochfeld
- 14: Durchgangslöcher
- 15: Löcher
- 16: Doppelpfeil
- 17: Förderband
- 18: Trocknerband
- 19: Trockner
- 20: Rahmen

## Patentansprüche

1. Pelletiervorrichtung für entwässertes pastöses Material, insbesondere Klärschlamm, mit einem Schlamm-Aufnahmebehälter trichterförmigen Querschnitts, mit einer Einrichtung, die das pastöse Schlammaterial in den Aufnahmebehälter fördert und darin einen Druck aufbaut, mit einer unterhalb des Aufnahmebehälters angeordneten, eine Vielzahl von Durchgangslöchern aufweisenden Matrize, bestehend aus einem Matrizenunterteil oder Scherteil und einem über dem Matrizenunterteil vorhandenen Matrizenoberteil, wobei zum Zwecke der Ablängung der Pellets wenigstens eines der Teile relativ zum anderen in der Querebene verschiebbar ist, **dadurch gekennzeichnet**, daß der Ausgang des Aufnahmebehälters (3) aus einem ersten und zweiten an der Behälterwandung angeordneten, höhenverschiebbaren Schieber (4,5) besteht, daß das den Behälterausgang bildende Ende der Schieber (4,5) mit der dem Behälterausgang gegenüberliegenden Oberseite des Matrizenoberteils (7) gegen Schlammdurchtritt abdichtbar ist, daß das Matrizenoberteil (7) wenigstens ein erstes Lochfeld (9) und ein lochfreies Verschlußfeld (10) aufweist, wobei die Fläche jedes der Felder wenigstens der Fläche des Behälterausgangs entspricht, daß das Matrizenoberteil (7) mit einem separaten Antrieb in Verbindung steht, daß das Matrizenunterteil (11) mit einer eine oszillierende Bewegung ausführenden Antriebsvorrichtung verbunden ist und daß auf das Lochfeld (9) eine Einrichtung einwirkt, die nicht pelletierbares Schlammaterial gesteuert abträgt.

2. Pelletiervorrichtung nach Anspruch 1, **dadurch gekennzeichnet**, daß der Aufnahmebehälter (3) ein Druckbehälter ist.

3. Pelletiervorrichtung nach Anspruch 1, **dadurch gekennzeichnet**, daß die im Matrizenober- und unterteil (7,11) vorhandenen Durchgangslöcher (14,15) in Reihen gleicher Teilung festgelegt sind.

4. Pelletiervorrichtung nach Anspruch 1 bis 3, **dadurch gekennzeichnet**, daß in dem Matrizenoberteil (7) nach zwei aufeinander folgenden Lochfeldern (8,9) das freie Verschlußfeld (10) liegt.

5. Pelletiervorrichtung nach den Ansprüchen 1 bis 3, **dadurch gekennzeichnet**, daß zwischen zwei Lochfeldern (8,9) das lochfreie Verschlußfeld (10) liegt.

6. Pelletiervorrichtung nach Anspruch 1 bis 5, **dadurch gekennzeichnet**, daß die Durchgangslöcher (15) des Matrizenunterteils (11) im Vergleich zu den Durchgangslöchern (14) des Matrizenoberteils (7) einen größeren Durchmesser besitzen.

## Claims

1. Pelleting apparatus for drained paste-like material, especially sewage sludge, having a sludge tank of funnel-shaped cross-section having a device which conveys the paste-like sludge material into the tank and builds up pressure therein, having a mould with a plurality of through holes arranged beneath the tank, the mould consisting of a mould bottom part or shearing part and a mould top part located above the mould bottom part, at least one of the parts being displaceable relative to the other in the transverse plane for the purpose of cutting off the pellets, characterised in that the outlet of the tank (3) comprises a first and a second height-adjustable slide member (4, 5) arranged on the tank wall, that the end of the slide members (4, 5) forming the tank outlet is sealable with the upper side of the mould top part (7) lying opposite the tank outlet to the passage of sludge, that the mould top part (7) has at least one perforated zone (9) and a non-perforated blank zone (10), the area of each of the zones corresponding at least to the area of the tank outlet, that the mould top part (7) is in connection with a separate drive means, that the mould bottom part (11) is connected to a driving device performing an oscillating movement and that a device that removes non-pelletable sludge material in a controlled manner acts on the perforated zone (9).

2. Pelleting apparatus according to claim 1, characterised in that the tank (3) is a pressure tank.

3. Pelleting apparatus according to claim 1, characterised in that the through holes (14, 15) present in the mould top part and bottom part (7, 11) are fixed in rows of equal spacing.

4. Pelleting apparatus according to claims 1 to 3, characterised in that in the mould top part (7) the free blank zone (10) lies after two successive perforated zones (8, 9).

5. Pelleting apparatus according to claims 1 to 3, characterised in that the non-perforated blank zone (10) lies between two perforated zones (8, 9).

6. Pelleting apparatus according to claims 1 to 5, characterised in that the through holes (15) of the mould bottom part (11) have a larger diameter compared with the through holes (14) of the mould top part (7).

## Revendications

1. Installation pour la transformation en "pellets" (ou boulettes, ou granulés) de matières déshydratées, pâteuses, en particulier de boues de curage, comportant un récipient de réception de boues de curage, présentant une section transversale en forme de trémie, un dispositif destiné au transport de matières pâteuses à base de boues de curage dans ce récipient de réception et y créant une pression ainsi qu'un grand nombre de matrices dotées de trous traversants, et constituées d'une partie inférieure de matrice, ou partie de cisaillement, et d'une partie supérieure de matrice située au-dessus de la partie inférieure de matrice, au moins une des parties pouvant être déplacée par rapport à l'autre dans le plan transversal en vue de la coupe à longueur des "pellets" (ou boulettes, ou granulés), caractérisée en ce que la sortie du récipient de réception (3) est constituée d'un premier et d'un second coulisseau (4, 5) disposés sur la paroi du récipient et susceptibles d'être déplacés dans le sens de la hauteur; en ce que l'extrémité des coulisseaux (4, 5) formant sortie du récipient peut être rendue étanche, à l'encontre du passage de la boue de curage, au moyen de la partie supérieure (7) de matrice située en face de la sortie du récipient; en ce que la partie supérieure (7) de matrice présente au moins une première zone (9) munie de trous et une zone de fermeture (10) exempte de trous, la surface de chacune des zones correspondant au moins à la surface de la sortie du récipient, en ce que la partie supérieure (7) de matrice est reliée à un dispositif d'entraînement séparé, en ce que la partie inférieure (11) de matrice est reliée à un dispositif d'entraînement exécutant un mouvement oscillant et en ce qu'un dispositif agit sur la zone (9) munie de trous, en raclant de façon commandée les matières de boues de curage qu'il n'est pas possible de transformer en "pellets" (ou boulettes, ou granulés).

2. Dispositif pour la transformation en "pellets" (ou boulettes, ou granulés), selon la revendication 1, caractérisé en ce que le récipient de réception (3) est un récipient sous pression.

3. Dispositif pour la transformation en "pellets" (ou boulettes, ou granulés), selon la revendication 1, caractérisé en ce que les trous traversants (14, 15) qui sont présents dans les pièces supérieures (7) et inférieure (11) de matrice sont disposés en rangées de pas uniforme.

4. Dispositif pour la transformation en "pellets" (ou boulettes, ou granulés), selon les revendications 1 à 3, caractérisé en ce que la zone (10) de fermeture exempte de trous est située dans la partie supérieure (7) de matrice à la suite de deux zones (8, 9) successives comportant des trous.

5. Dispositif pour la transformation en "pellets" (ou boulettes, ou granulés), selon les revendications 1 à 3, caractérisé en ce que la zone (10) de fermeture, exempte de trous, est située entre deux zones (8, 9) comportant des trous.

6. Dispositif pour la transformation en "pellets" (ou boulettes, ou granulés), selon les revendications 1 à 5, caractérisé en ce que les trous traversants (15) de la partie inférieure (11) de matrice ont un plus grand diamètre que les trous traversants (14) de la partie supérieure (7) de matrice.
